# EUROPEAN PATENT SPECIFICATION

(11) **EP 2 806 140 B1**
(45) Date of publication and mention of the grant of the patent: **23.03.2016**
(21) Application number: 13169226.1
(22) Date of filing: 24.05.2013
(51) Int. Cl.: F02D 19/06, F02D 41/40, F02D 19/10, F02D 41/00

(54) **Dual fuel engine and method of operating the same**
Zweistoffmotor und Betriebsverfahren dafür
Moteur à double flux et son procédé de fonctionnement

(43) Date of publication of application: 26.11.2014
(73) Proprietor: Caterpillar Motoren GmbH & Co. KG, 24159 Kiel (DE)
(72) Inventor: Sixel, Eike Joachim, 24109 Kiel (DE); Haas, Stefan, 24107 Quarnbek/ OT Flemhude (DE); Ruschmeyer, Kai, 27389 Fintel (DE); Schmidt, Andre, 18147 Rostock (DE)
(74) Representative: Kramer Barske Schmidtchen Patentanwälte PartG mbB

(56) References cited:
- EP-A1- 2 562 399
- DE-A1-102008 007 325
- US-B1- 6 202 601

## Description

### Technical Field

The present disclosure generally relates to a dual fuel engine and a method for operating such a dual fuel engine, i.e., an internal combustion engine running with both liquid fuel and gaseous fuel. Such a dual fuel engine may be equipped with an exhaust gas recirculation system (EGR) and/or may be charged via an exhaust gas turbocharger. In particular, but not exclusively, large internal combustion engines configured to burn fuel oil such as heavy fuel oil and/or diesel fuel oil and gas as used, for example, on ships, in power plants, or with heavy vehicles and construction vehicles may be controlled according to the present disclosure.

### Background

Generally, in dual fuel engines a compression ratio of intake air is considerably lower than in diesel engines in order to assure the safe operation of the dual fuel engine operating in the gas mode. This lower compression ratio results in a lower temperature and a lower pressure of the intake air.

When the dual fuel engine is operating in the gas mode, a pilot injection of a pilot liquid fuel such as, for example, diesel is injected into a cylinder of the dual fuel engine to ignite a charge of gaseous fuel. In addition, the pilot injector of the dual fuel engine may be used to inject pilot liquid fuel after combustion of the main liquid fuel in the liquid fuel mode for cooling.

US 6,202,601 B1 discloses a method and apparatus for dual fuel injection into an internal combustion engine. A gaseous fuel is used as a main fuel, and a pilot fuel is injected into a combustion chamber of the internal combustion engine prior to the injection of the gaseous main fuel to ignite the same. US 5,271,357 discloses an apparatus and method of introducing a primary fuel, which may be a coal water slutty, and a high combustion auxiliary fuel, which may be a conventional diesel fuel, into an internal combustion diesel engine. The auxiliary fuel is used as either a combustion igniter or a combustion enhancer, depending on the load conditions of the engine.

DE 10 2008 007 325 A1 discloses a method for testing ignition fluid injectors prior to switching a dual fuel engine to a gas mode. EP 2 562 399 A1 relates to a dual fuel engine with a control unit configured to control a pilot fuel injector to perform a shifted-pilot injection in a liquid fuel mode.

The present disclosure is directed, at least in part, to improving or overcoming one or more aspects of prior systems.

### Summary of the Disclosure

Generally, the present disclosure relates to a dual fuel engine configured to operate in a gas mode and a liquid fuel mode. In one aspect of the present disclosure, the dual fuel engine comprises at least one cylinder and a gas admission valve associated with the at least one cylinder for introducing a gaseous fuel into the cylinder in the gas mode. The dual fuel engine further comprises a main injector associated with the at least one cylinder for injecting a main liquid fuel into the cylinder in the liquid fuel mode and a pilot injector associated with the at least one cylinder for injecting a pilot liquid fuel into the cylinder. A control unit is configured to control a timing of an injection of the pilot liquid fuel by the pilot injector. The control unit is configured to control the pilot injector to inject the pilot liquid fuel before the main liquid fuel to help ignite the main liquid fuel when the engine is operating in the liquid fuel mode.

In another aspect of the present disclosure, a method of operating a dual fuel engine operable in a gas mode and a liquid fuel mode comprises introducing a gaseous fuel and injecting a pilot liquid fuel into at least one cylinder of the dual fuel engine in the gas mode. The method further comprises injecting a main liquid fuel into the at least one cylinder in the liquid fuel mode. Further, the method comprises injecting the pilot liquid fuel into the at least one cylinder before injecting the main liquid fuel to help ignite the main liquid fuel when the engine is operating in the liquid fuel mode.

As used herein, dual fuel engine may mean any type of internal combustion engine configured to combust both liquid fuel, for example, heavy fuel oil (HFO) or marine diesel oil (MDO), and gaseous fuel, for example, natural gas.

According to the present disclosure, "late" may mean inter alia that an injection of main liquid fuel begins later than in a high load liquid fuel mode. "Early" may mean inter alia that an injection of pilot liquid fuel begins earlier than in the high load liquid fuel mode.

It has to be noted that the terms "gas fuel mode", "gas mode" and "gaseous fuel mode" may be used herein for the same kind of operating mode of the dual fuel engine. All these terms may refer to the kind of operating mode of a dual fuel engine in which the dual fuel engine burns gaseous fuel such as, for example, gas of any gas quality, particularly non-pipeline quality gas as associated with gas in oil fields. In this respect, it is to be understood that a pilot injection system injects a very small amount of pilot liquid fuel when the dual fuel engine is operating in the gas mode. The pilot injection system injects a small amount of pilot liquid fuel to ignite a gas/air mixture. Such pilot injection systems are well-known in the art and common in dual fuel engines. A conventional injection system is used when the dual fuel engine runs on liquid fuel such as heavy fuel oil or the like. If a stop of liquid fuel is mentioned herein in respect to a gas mode, the stop of the supply of liquid fuel to the conventional injection system is meant, not to the pilot injection system.

It is to be understood that any reference to an inlet valve, an outlet valve, a gas admission valve or a fuel pump does not limit the present disclosure to one single valve or pump. To the contrary, one or more inlet, outlet and gas admission valves or one or more fuel injection pumps may be controlled by any known method.

Furthermore, it is to be understood that both the foregoing general description and the following detailed description are exemplary and explanatory only and are not restrictive of the disclosure. Other features and aspects of this disclosure will be apparent to the skilled person based upon the following description, the accompanying drawings and the attached claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic diagram of an injection system that may be utilized for a dual fuel engine according to the present disclosure;
Fig. 2 shows a schematic diagram of an exemplary device for controlling the operation of the dual fuel engine according to the present disclosure; and
Fig. 3 shows a table representing exemplary valve timings and injection timings according to the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that, when a liquid fuel such as heavy fuel oil (HFO) is used in a dual fuel engine, it may be difficult to ignite the mixture of liquid fuel and intake air in the liquid fuel mode due to the low compression ratio of the intake air. This may be especially difficult under low engine loads.

According to the present disclosure, this problem may be solved at least in part by using the pilot injector of the dual fuel engine to inject a pilot liquid fuel into the cylinders of the dual fuel engine to help ignite the main liquid fuel when the engine is operating in the liquid fuel mode. The pilot liquid fuel may be injected a predetermined crank angle before the start of the main liquid fuel injection. The combustion of the injected pilot liquid fuel significantly increases the temperature and the pressure in the combustion chamber of the corresponding cylinder, resulting in a good combustion of the main liquid fuel, for example, HFO.

Further, the present disclosure may be based in part on the realization that providing an early pilot fuel injection in a low load liquid fuel mode may assure a relatively smoke-free combustion of the main liquid fuel in this low load liquid fuel mode.

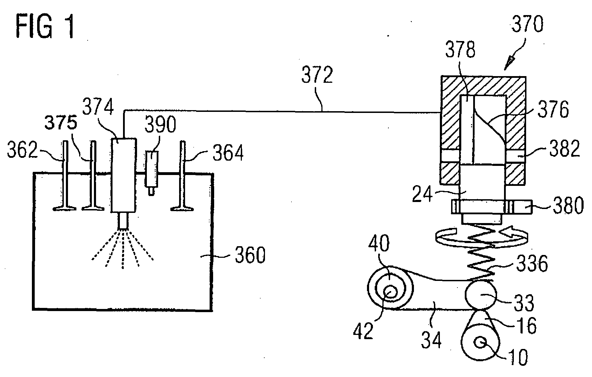

According to Fig. 1, a not illustrated dual fuel engine, charged via an exhaust gas turbocharger, includes a camshaft 10 which is preferably formed integrally with, for example, several cams, for example, a pump cam 16. In the exemplary embodiment described in the following, the dual fuel engine is configured to operate with heavy fuel oil as one example for a main liquid fuel in a low load liquid fuel mode and a high load liquid fuel mode, and on gas in a gas mode. It should be appreciated, however, that other embodiments in accordance with the present disclosure may operate with different main liquid fuels, for example, crude oil, PyOil, or the like.

The not illustrated dual fuel engine may include at least one cylinder 360. It should be appreciated that any number of cylinders having the same configuration as cylinder 360 may be included in the dual fuel engine, in any known cylinder configuration.

Cylinder 360 includes an inlet valve 362, an outlet valve 362, a gas admission valve 375, a main liquid fuel injector 374 and a pilot liquid fuel injector 390.

Inlet valve 362 is configured to receive a charge of compressed intake air for combustion in the combustion chamber of cylinder 360. Gas admission valve 375 is configured to receive a charge of gaseous fuel for combustion with the compressed intake air in the cylinder when the dual fuel engine is operating in the gas mode. It should be appreciated that in some embodiments the gaseous fuel may be mixed with the compressed intake air prior to being introduced into the combustion chamber of cylinder 360. In these exemplary embodiments, gas admission valve 375 may be omitted, and the mixture may be introduced into the combustion chamber via inlet valve 362. Inlet valve 362 may be connected to an intake manifold (not shown) of the dual fuel engine. One or more sensors (not shown) may be disposed in the intake manifold or at other locations upstream of inlet valve 362 to measure parameters of the compressed intake air, for example, temperature, pressure, or the like.

Outlet valve 364 is configured to open to release the exhaust resulting from the combustion process in the combustion chamber of cylinder 360 to an exhaust system of the dual fuel engine (not shown).

As shown in Fig. 1, an injection pump 370 is connected to main liquid fuel injector 374 via a pressure line 372. Injector 374 configured to perform a main injection of main liquid fuel in the high load liquid fuel mode and the low load liquid fuel mode of the dual fuel engine.

In some embodiments, injection pump 370 includes a pump piston 24 with a control edge 376 and a longitudinal groove 378. For adjusting the supply rate, pump piston 24 may be turned around an axis parallel to its linear reciprocating movement via, e.g., a control rod 380. Supply bores 382 may be provided to a supply space of injection pump 370. As shown in Fig. 1, the point of time at which pump piston 24 may close supply bores 382 during its upward stroke can be adjusted by, e.g., rotating an eccentric disk 40, such that the position of a tracing roll 33, which is supported on the end of a pump operating lever 34, is displaced, e.g., along an approximately horizontal line in Fig. 1. It should be appreciated that, in other exemplary embodiments, injection pump 370 may have a different configuration than the one shown in Fig. 1, or the main liquid fuel may be delivered to main liquid fuel injector 374 in any other known manner.

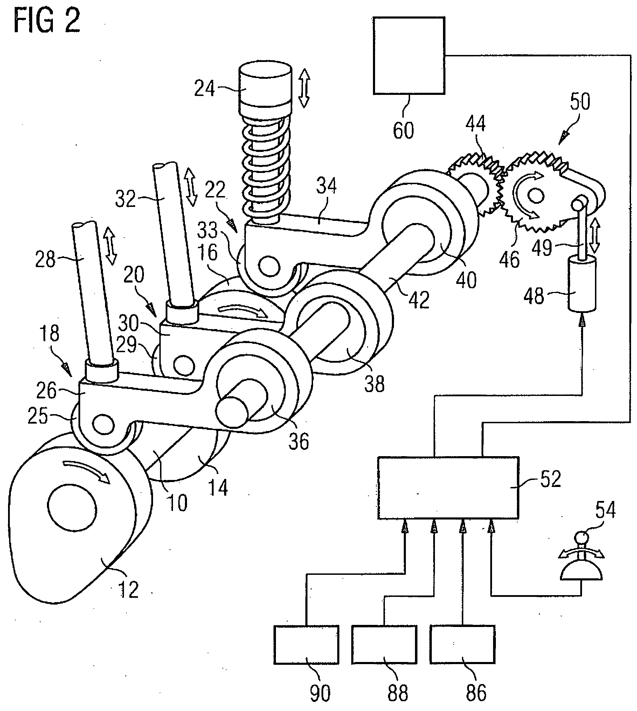

An exemplary embodiment of a control device for injection pump 370 and inlet and outlet valves 362 and 364 is shown in Fig. 2. As shown in Fig. 2, camshaft 10 includes an inlet cam 12, an outlet cam 14 and pump cam 16.

Inlet cam 12 is adapted to operate inlet valve 362 that is arranged in an inlet of the combustion chamber of cylinder 360 and operated via, for example, an inlet valve operating arrangement 18. Outlet cam 14 is adapted to operate outlet valve 364 arranged in an outlet of the combustion chamber of cylinder 360 of the dual fuel engine via, for example, an outlet valve operating arrangement 20. Pump cam 16 is adapted to operate pump piston 24 of injection pump 370 via, for example, a pump operating arrangement 22.

Inlet valve operating arrangement 18 comprises an inlet valve operating lever 26 formed, for example, as an oscillating arm, which is adapted to trace the stroke of inlet cam 12 via, for example, a roll 25 supported thereon, and transmit the same to inlet valve 362 via, for example, an inlet valve operating lifter 28 in order to operate said inlet valve.

In a similar manner, outlet valve operating arrangement 20 is provided with an outlet valve operating lever 30, which is adapted to trace the stroke of outlet cam 14 via, for example, a roll 29 supported thereon and transmit the same to an outlet valve operating lifter 32.

The stroke of pump cam 16 may be traced by, for example, roll 33 arranged at the end of pump operating lever 34 and may be transmitted to pump piston 24.

At the ends facing away from tracing rolls 25, 29, 33, operating levers 26, 30 and 34 are supported on eccentric disks 36, 38 and 40, which are preferably formed integrally with a rotatable shaft 42 that may be supported on an engine housing (not shown). The eccentricities of the preferably circular cylindrical circumferential surfaces of eccentric disks 36, 38, 40 relative to the axis of shaft 42, as well as the relative positions of the eccentricities relative to the rotational position of shaft 42 may be selected individually according to the respective requirements outlined herein.

In order to adjust the rotational position of shaft 42, shaft 42 may be connected, for example, torsionally stiff, to a gearwheel 44 or any other applicable element meshing with, for example, teeth of a segmental gearwheel 46, whose rotational position may be adjustable via, for example, an actuator 48 including an actuator rod 49. Actuator 48 together with segmental gearwheel 46 and gearwheel 44 may form an actuator unit 50. A hydraulic or pneumatic cylinder may be used as a longitudinally adjustable element. In other embodiments, a linear motor or any other suitable element may be adapted to rotate shaft 42 in an appropriate manner.

An input device 54 for adjusting shaft 42, a plurality of cylinder pressure sensors 86 for detecting the cylinder pressure in the cylinders of the dual fuel engine, and a speed sensor 88 for detecting the rotational speed of the crankshaft of the dual fuel engine may be connected to inputs of a control unit 52. A load sensor 90 for detecting the required load and its change may also be connected to a further input of control unit 52.

By means of the eccentricities of the three eccentric disks 36, 38, 40, the rotational positions of disks 36, 38, 40 on shaft 42, i.e. the opening and/or closing of inlet valve 362 and outlet valve 364 and the start of a liquid fuel main injection may be controlled in an appropriate manner.

It should be appreciated that in other embodiments a different control device may be used to control operation of inlet valve 362, outlet valve 364 and/or main liquid fuel injector 374. Accordingly, the present disclosure is not limited to dual fuel engines controlled via the exemplary device of Fig. 2.

Pilot liquid fuel injector 390 is provided as part of a pilot injection system to perform a pilot injection of pilot liquid fuel into the combustion chamber of cylinder 360 in any one of the operating modes of the dual fuel engine. It should be appreciated that the term "pilot injection" as used herein does not necessarily mean the pilot fuel is injected before a main liquid fuel. In some instances, the pilot liquid fuel may be injected after the main liquid fuel.

In some embodiments, pilot injector may be configured to receive pressurized diesel fuel from a common rail (not shown). Pilot injector 390 may have any known configuration and may be controlled to perform a pilot liquid fuel injection with at a predetermined timing and with a predetermined amount under the control of control unit 52. It should be appreciated that control unit 52 could be a separate control unit dedicated to controlling a timing of an injection of pilot liquid fuel by pilot injector 390. In other embodiments, control unit 52 may be embodied as part of an engine control unit (ECU) of the dual fuel engine.

Control unit 52 preferably comprises a microprocessor with appropriate program and data memories and includes several outputs, at least one of said outputs being connected to pilot injector 52. Control unit 52 is preferably provided with several inputs, one of said inputs being connected with, for example, a sensor for detecting an operating condition of the dual fuel engine. For example, control unit 52 may be configured to detect a load of the dual fuel engine. Further, control unit may be connected to the one or more sensors disposed to detect the parameters of the compressed intake air supplied to cylinder 360 via inlet valve 362.

In some exemplary embodiments of the present disclosure, the timing of the main liquid fuel injection is late in the low load liquid fuel mode when compared to the high load liquid fuel, for example, at 5° BTDC, wherein BTDC means Before Top Dead Center. It should be appreciated, however, that in other embodiments the timing of the main liquid fuel injection may be the same in the low load liquid fuel mode and the high load liquid fuel mode, if appropriate. Further, there is less valve overlap in the low load liquid fuel mode than in the high load liquid fuel mode. In other words, in the low load liquid fuel mode, inlet valve 362 opens early and outlet valve 364 opens late. The valve lifting curves and the main injection timing are shifted by rotation of the appropriately configured shaft 42.

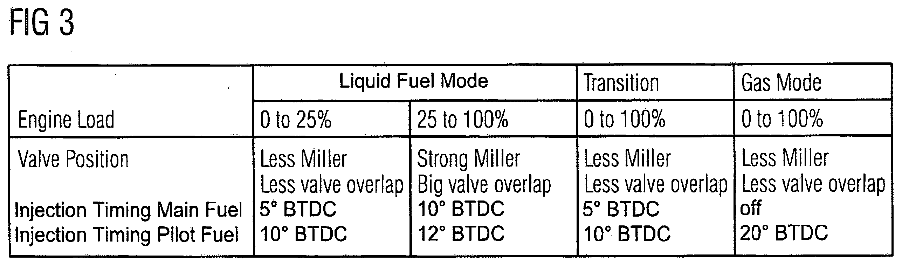

Fig. 3 shows exemplary injection timings in the different operating modes of the dual fuel engine. As shown in Fig. 3, to facilitate combustion of the main liquid fuel, for example, in the low load liquid fuel mode, an early injection of pilot liquid fuel is performed, for example, at 10° BTDC.

Similarly, a pilot fuel injection is performed in the gas mode. The pilot injection in the gas mode may be performed at a different timing than in the low load liquid fuel mode. Further, in some embodiments, the timing of the pilot injection may be adjusted during the transition between the gas mode and the liquid fuel mode, for example, when shaft 42 is rotated between a first position associated with the gas mode and a second position associated with the liquid fuel mode.

In some embodiments, different amounts of pilot fuel may be injected in the gas mode and in the low load liquid fuel mode. For example, in the low load liquid fuel mode, pilot injector 390 may be controlled to inject pilot fuel at the maximum capacity of pilot injector 390 to aid the combustion process in cylinder 360. In the gas mode, significantly less pilot fuel may be injected by pilot injector 360.

In some exemplary embodiments, control unit 52 may receive detection results from sensors associated with cylinder 360, for example, cylinder pressure sensor 86, and may modify the timing of the pilot injection for each cylinder based on the received detection results, for example, to reduce knocking.

It should be appreciated that the timings for the diesel fuel main injection and the diesel fuel pilot injection given in Fig. 3 are only exemplary and may be modified within certain boundaries. For example, the pilot injection in the liquid fuel mode may be performed at between 30° BTDC to 0° BTDC, the main injection in the low load liquid fuel mode may be performed at between 20° BTDC to 0° BTDC, and the main injection in the high load liquid fuel mode may be performed at between 20° BTDC to 0° BTDC.

In some embodiments, pilot injector 390 may be configured to inject pilot liquid fuel at the same or different timings in the low load liquid fuel mode and the high load liquid fuel mode. In other embodiments, control unit 52 may be configured to control pilot injector 390 to inject pilot liquid fuel before the main liquid fuel in the low load liquid fuel mode and after the main liquid fuel in the high load liquid fuel mode. In some embodiments, pilot injector 390 may be configured to inject pilot liquid fuel in the liquid fuel mode at a timing that is later than in the gas mode.

According to some exemplary embodiments, pilot injector 390 may be configured to inject pilot liquid fuel a predetermined crank angle before the main liquid fuel is injected. The predetermined crank angle may, for example, be between around 0° to 10°, in particular, between around 1° to 4° crank angle before the main liquid fuel is injected. In some embodiments, the crank angle may be varied depending on operating parameters of the dual fuel engine, for example, the load of the same.

In some embodiments, control unit 52 may receive detection results from one or more sensors associated with the dual fuel engine and may be configured to control the timing and/or amount of the pilot fuel injection in the liquid fuel mode based on the received detection results. For example, control unit may be configured to receive a detection result for the compression ratio of the intake air supplied to cylinder 360, and may control pilot injector 360 based on the detected compression ratio. In other embodiments, control unit 52 may be configured to set a compression ratio for the dual fuel engine and control the pilot fuel injection by pilot fuel injector 360 based on this set compression ratio.

In some embodiments, heavy fuel oil (HFO) may be used as the main liquid fuel, and diesel may be used as the pilot liquid fuel. It should be appreciated, however, that different fuels may be used without deviating from the teachings of the present disclosure.

In some exemplary embodiments of the present disclosure, the low load range and the high load range may represent the total load range of the dual fuel engine. The high load range may, for example, comprise a middle and a high load range of the engine. In an exemplary embodiment of the present disclosure, the low load range may be defined as 0% to 30% of nominal load and the high load range may be defined as 30% to 110% of nominal load.

### Industrial Applicability

The present disclosure may be applied to combustion engine utilizing a main liquid fuel that may be difficult to ignite depending, for example, on operating conditions of the combustion engine or the environment in which the combustion engine is operating, for example, an ambient temperature or the like. While the present disclosure has been described with respect to a dual fuel engine utilizing gaseous fuel and liquid fuel such as HFO, the present disclosure is not limited to such dual fuel engines and could also be applied to other engines.

In order to realize the method according to the disclosure, advantageously the following operating parameters are chosen:

At stationary operation, i.e. at constant position of operating element 54, the dual fuel engine is operated at a load greater than 25% of the full load, i.e. with a first angle position (high load liquid fuel mode angle position) of shaft 42, for example, in the high load liquid fuel mode. In order to achieve better combustion of the main liquid fuel, a pilot liquid fuel injection may be performed prior to the main liquid fuel injection, for example, 2° crank angle before the main liquid fuel injection at around 12° BTDC. Alternatively and/or additionally, a late pilot fuel injection may be performed after the main liquid fuel injection, for example, at around 0° BTDC.

At loads below 25% of the full load, shaft 42 is turned to a second angle position (low load liquid fuel mode angle position/gas mode angle position), so that the dual fuel engine is operated with the valve timings and the late main injection timing and the early pilot injection timing in the low load liquid fuel mode as shown in Fig. 3. In this operating region, the main liquid fuel is injected at, for example, 5° BTDC. To facilitate combustion of the main liquid fuel, a pilot injection of pilot liquid fuel may be injected, for example, 5° crank angle before the main liquid fuel, for example, at 10° BTDC. The injection of the pilot liquid fuel in the low load liquid fuel mode allows for a relatively smoke-free combustion in this mode. Further, it allows for combustion of liquid fuels that may generally be difficult to use with the relatively low compression ratio generally associated with a dual fuel engine.

If the operator decides to run the dual fuel engine with gas, the dual fuel engine has to be transitioned from the high load diesel fuel mode or the low load diesel fuel mode to the gas mode. Pilot injector 390 may inject a pilot injection of liquid fuel to ignite the gas in a known manner, for example, at 20° BTDC.

Herein, a large internal combustion engines may be any kind of dual fuel engine having an output range of 1,000 kW or more. Dual fuel engines as disclosed herein may be suitable for Heavy Fuel Oil (HFO), Marine Diesel Oil (MDO), Diesel Oil (DO) and PyOil operations.

Although preferred embodiments of this disclosure have been described herein, improvements and modifications may be incorporated without departing from the scope of the appended claims.

## Claims

1. A dual fuel engine configured to operate in a gas mode and a liquid fuel mode, the dual fuel engine including:
at least one cylinder (360);
a gas admission valve (375) associated with the at least one cylinder (360) for introducing a gaseous fuel into the cylinder in the gas mode;
a main injector (374) associated with the at least one cylinder (360) for injecting a main liquid fuel into the cylinder in the liquid fuel mode;
a pilot injector (390) associated with the at least one cylinder (360) for injecting a pilot liquid fuel into the cylinder; and
a control unit (52) for controlling a timing of an injection of the pilot liquid fuel by the pilot injector (390),
wherein the control unit (52) is configured to control the pilot injector (390) to inject the pilot liquid fuel before the main liquid fuel to help ignite the main liquid fuel when the engine is operating in the liquid fuel mode.

2. The dual fuel engine of claim 1, wherein the control unit (52) is configured to control the pilot injector (390) to inject the pilot liquid fuel before the main liquid fuel when the dual fuel engine is operating in a low load liquid fuel mode.

3. The dual fuel engine of claim 2, wherein the control unit (52) is configured to control the pilot injector (390) to inject the pilot liquid fuel after the main liquid fuel when the dual fuel engine is operating in a high load liquid fuel mode.

4. The dual fuel engine of any one of claims 1 to 3, wherein the control unit (52) is configured to control the pilot injector (390) to inject the pilot liquid fuel a predetermined crank angle before the main liquid fuel is injected by the main injector.

5. The dual fuel engine of claim 4, wherein the predetermined crank angle is varied depending on the load of the dual fuel engine.

6. The dual fuel engine of claim 4 or 5, wherein the control unit (52) is configured to control the pilot injector (390) to inject the pilot liquid fuel between around 0° to 10°, in particular, between around 1° to 4° crank angle before the main liquid fuel is injected by the main injector.

7. The dual fuel engine of any one of the preceding claims, wherein the control unit (52) is configured to control the pilot injector (390) to inject the pilot liquid fuel in the liquid fuel mode at a timing that is later than in the gas mode.

8. The dual fuel engine of any one of the preceding claims, wherein the control unit (52) is configured to control the pilot injector (390) to inject the pilot liquid fuel in the liquid fuel mode at between around 30° to 0° BTDC, preferably 25° to 5° BTDC, particularly 20° to 5° BTDC.

9. The dual fuel engine of any one of the preceding claims, wherein the control unit (52) is configured to control the pilot injector (390) to inject different amounts of pilot liquid fuel in the liquid fuel mode and in the gas mode, respectively.

10. The dual fuel engine of claim 9, wherein the control unit (52) is configured to control the pilot injector (390) to inject a maximum amount of pilot liquid fuel in the liquid fuel mode.

11. The dual fuel engine of any one of the preceding claims, further comprising one or more sensors for detecting a cylinder pressure and/or a temperature and/or a pressure of compressed intake air supplied to the dual fuel engine, wherein the control unit (52) is configured to adjust the amount and/or timing of the pilot fuel injection by the pilot injector (390) in the liquid fuel mode based on a detection result from the one or more sensors.

12. The dual fuel engine of any one of the preceding claims, wherein the control unit (52) is configured to set an intake manifold air pressure, and adjust the amount and/or timing of the pilot fuel injection by the pilot injector (390) based on the set intake manifold air pressure.

13. The dual fuel engine of any one of the preceding claims, wherein the main injector (374) is configured to inject heavy fuel oil as the main liquid fuel, and the pilot injector (390) is configured to inject diesel oil as the pilot liquid fuel.

14. A method of operating a dual fuel engine operable in a gas mode and a liquid fuel mode, the method comprising:
introducing a gaseous fuel and injecting a pilot liquid fuel into at least one cylinder (360) of the dual fuel engine in the gas fuel mode;
injecting a main liquid fuel into the at least one cylinder (360) of the dual fuel engine in the liquid fuel mode; and
injecting the pilot liquid fuel into the at least one cylinder (360) of the dual fuel engine before injecting the main liquid fuel to help ignite the main liquid fuel when the engine is operating in the liquid fuel mode.

15. The method of claim 14, wherein the step of injecting the pilot liquid fuel in the liquid fuel mode includes injecting the pilot liquid fuel at between around 30° to 0° BTDC, preferably 25° to 5° BTDC, particularly 20° to 5° BTDC.

## Patentansprüche

1. Zweikraftstoffmotor, der für einen Betrieb in einem Gasmodus und einem Flüssigkraftstoffmodus ausgebildet ist, mit:
mindestens einem Zylinder (360);
einem dem mindestens einen Zylinder (360) zugeordneten Gaszufuhrventil (375) zum Einleiten eines gasförmigen Kraftstoffs in den Zylinder in dem Gasmodus;
einem dem mindestens einen Zylinder (360) zugeordneten Hauptinjektor (374) zum Einspritzen eines Hauptflüssigkraftstoffs in den Zylinder in dem Flüssigkraftstoffmodus;
einem dem mindestens einen Zylinder (360) zugeordneten Pilotinjektor (390) zum Einspritzen eines Pilotflüssigkraftstoffs in den Zylinder; und
einer Steuereinheit (52) zum Steuern eines Einspritzzeitpunkts des Pilotflüssigkraftstoffs durch den Pilotinjektor (390),
wobei die Steuereinheit (52) ausgebildet ist zum Steuern des Pilotinjektors (390) zum Einspritzen des Pilotflüssigkraftstoffs vor dem Hauptflüssigkraftstoff zur Unterstützung einer Zündung des Hauptflüssigkraftstoffs, wenn der Motor in dem Flüssigkraftstoffmodus betrieben wird.

2. Zweikraftstoffmotor nach Anspruch 1, bei dem die Steuereinheit (52) ausgebildet ist zum Steuern des Pilotinjektors (390) zum Einspritzen des Pilotflüssigkraftstoffs vor dem Hauptflüssigkraftstoff, wenn der Zweikraftstoffmotor in einem Niedriglastflüssigkraftstoffmodus betrieben wird.

3. Zweikraftstoffmotor nach Anspruch 2, bei dem die Steuereinheit (52) ausgebildet ist zum Steuern des Pilotinjektors (390) zum Einspritzen des Pilotflüssigkraftstoffs nach dem Hauptflüssigkraftstoff, wenn der Zweikraftstoffmotor in einem Hochlastflüssigkraftstoffmodus betrieben wird.

4. Zweikraftstoffmotor nach einem der Ansprüche 1 bis 3, bei dem die Steuereinheit (52) zum Steuern des Pilotinjektors (390) zum Einspritzen des Pilotflüssigkraftstoffs bei einem vorbestimmten Kurbelwinkel vor einer Einspritzung des Hauptflüssigkraftstoffs durch den Hauptinjektor ausgebildet ist.

5. Zweikraftstoffmotor nach Anspruch 4, bei dem der vorbestimmte Kurbelwinkel in Abhängigkeit von der Last des Zweikraftstoffmotors variiert wird.

6. Zweikraftstoffmotor nach Anspruch 4 oder 5, bei dem die Steuereinheit (52) zum Steuern des Pilotinjektors (390) zum Einspritzen des Pilotflüssigkraftstoffs bei einem Kurbelwinkel zwischen etwa 0° bis 10°, insbesondere zwischen etwa 1° bis 4°, vor einer Einspritzung des Hauptflüssigkraftstoffs durch den Hauptinjektor ausgebildet ist.

7. Zweikraftstoffmotor nach einem der vorhergehenden Ansprüche, bei dem die Steuereinheit (52) zum Steuern des Pilotinjektors (390) zum Einspritzen des Pilotflüssigkraftstoffs in dem Flüssigkraftstoffmodus zu einem Zeitpunkt, der später als in dem Gasmodus ist, ausgebildet ist.

8. Zweikraftstoffmotor nach einem der vorhergehenden Ansprüche, bei dem die Steuereinheit (52) zum Steuern des Pilotinjektors (390) zum Einspritzen des Pilotflüssigkraftstoffs in dem Flüssigkraftstoffmodus zwischen etwa 30° bis 0° BTDC, bevorzugt 25° bis 5° BTDC, insbesondere 20° bis 5° BTDC, ausgebildet ist.

9. Zweikraftstoffmotor nach einem der vorhergehenden Ansprüche, bei dem die Steuereinheit (52) zum Steuern des Pilotinjektors (390) zum Einspritzen unterschiedlicher Mengen an Pilotflüssigkraftstoff jeweils in dem Flüssigkraftstoffmodus und in dem Gasmodus ausgebildet ist.

10. Zweikraftstoffmotor nach Anspruch 9, bei dem die Steuereinheit (52) zum Steuern des Pilotinjektors (390) zum Einspritzen einer maximalen Menge an Pilotflüssigkraftstoff in dem Flüssigkraftstoffmodus ausgebildet ist.

11. Zweikraftstoffmotor nach einem der vorhergehenden Ansprüche, ferner mit einem oder mehreren Sensoren zum Detektieren eines Zylinderdrucks und/oder einer Temperatur und/oder eines Drucks von komprimierter Ansaugluft, die dem Zweikraftstoffmotor zugeführt wird, wobei die Steuereinheit (52) zum Anpassen der Menge und/oder des Zeitpunkts der Pilotkraftstoffeinspritzung durch den Pilotinjektor (390) in dem Flüssigkraftstoffmodus basierend auf einem Detektionsergebnis von dem einen oder den mehreren Sensoren ausgebildet ist.

12. Zweikraftstoffmotor nach einem der vorhergehenden Ansprüche,
bei dem die Steuereinheit (52) zum Einstellen eines Ansaugrohrluftdrucks und Anpassen der Menge und/oder des Zeitpunkts der Pilotkraftstoffeinspritzung durch den Pilotinjektor (390) basierend auf dem eingestellten Ansaugrohrluftdruck ausgebildet ist.

13. Kraftstoffmotor nach einem der vorhergehenden Ansprüche,
bei dem der Hauptinjektor (374) zum Einspritzen von Schweröl als den Hauptflüssigkraftstoff ausgebildet ist und der Pilotinjektor (390) zum Einspritzen von Dieselöl als dem Pilotflüssigkraftstoff ausgebildet ist.

14. Verfahren zum Betreiben eines Zweikraftstoffmotors, der in einem Gasmodus und einem Flüssigkraftstoffmodus betreibbar ist, mit folgenden Schritten:
Einleiten eines gasförmigen Kraftstoffs und Einspritzen eines Pilotflüssigkraftstoffs in mindestens einen Zylinder (360) des Zweikraftstoffmotors in dem Gaskraftstoffmodus;
Einspritzen eines Hauptflüssigkraftstoffs in den mindestens einen Zylinder (360) des Zweikraftstoffmotors in dem Flüssigkraftstoffmodus; und
Einspritzen des Pilotflüssigkraftstoffs in den mindestens einen Zylinder (360) des Zweikraftstoffmotors vor einem Einspritzen des Hauptflüssigkraftstoffs zur Unterstützung einer Zündung des Hauptflüssigkraftstoffs, wenn der Motor in dem Flüssigkraftstoffmodus betrieben wird.

15. Verfahren nach Anspruch 14, bei dem das Einspritzen des Pilotflüssigkeitskraftstoffs in dem Flüssigkraftstoffmodus des Einspritzen des Flüssigkeitskraftstoffs zwischen etwa 30° bis 0° BTDC, bevorzugt 25° bis 5° BTDC, insbesondere 20° bis 5° BTDC, beinhaltet.

## Revendications

1. Moteur à double flux configuré pour fonctionner dans un mode à gaz et dans un mode à carburant liquide, le moteur à double flux comprenant :
au moins un cylindre (360) ;
une soupape d'admission de gaz (375) associée à l'au moins un cylindre (360) pour introduire un carburant gazeux dans le cylindre dans le mode à gaz ;
un injecteur principal (374) associé à l'au moins un cylindre (360) pour injecter un carburant liquide principal dans le cylindre dans le mode à carburant liquide ;
un injecteur pilote (390) associé à l'au moins un cylindre (360) pour injecter un carburant liquide pilote dans le cylindre ; et
une unité de commande (52) pour commander un timing d'une injection du carburant liquide pilote par l'injecteur pilote (390),
dans lequel l'unité de commande (52) est configurée pour commander à l'injecteur pilote (390) d'injecter le carburant liquide pilote avant le carburant liquide principal pour aider à l'allumage du carburant liquide principal lorsque le moteur fonctionne dans le mode à carburant liquide.

2. Moteur à double flux selon la revendication 1, dans lequel l'unité de commande (52) est configurée pour commander à l'injecteur pilote (390) d'injecter le carburant liquide pilote avant le carburant liquide principal lorsque le moteur à double flux fonctionne dans un mode à carburant liquide de faible charge.

3. Moteur à double flux selon la revendication 2, dans lequel l'unité de commande (52) est configurée pour commander à l'injecteur pilote (390) d'injecter le carburant liquide pilote après le carburant liquide principal lorsque le moteur à double flux fonctionne dans un mode à carburant liquide de forte charge.

4. Moteur à double flux selon l'une quelconque des revendications 1 à 3, dans lequel l'unité de commande (52) est configurée pour commander à l'injecteur pilote (390) d'injecter le carburant liquide pilote à un angle de vilebrequin prédéterminé avant que l'injecteur principal n'injecte le carburant liquide principal.

5. Moteur à double flux selon la revendication 4, dans lequel l'angle de vilebrequin prédéterminé est varié en fonction de la charge du moteur à double flux.

6. Moteur à double flux selon la revendication 4 ou 5, dans lequel l'unité de commande (52) est configurée pour commander à l'injecteur pilote (390) d'injecter le carburant liquide pilote à un angle de vilebrequin entre environ 0° et 10°, en particulier entre environ 1° et 4°, avant que l'injecteur principal n'injecte le carburant liquide principal.

7. Moteur à double flux selon l'une quelconque des revendications précédentes, dans lequel l'unité de commande (52) est configurée pour commander à l'injecteur pilote (390) d'injecter le carburant liquide pilote dans le mode à carburant liquide à un timing après celui dans le mode à gaz.

8. Moteur à double flux selon l'une quelconque des revendications précédentes, dans lequel l'unité de commande (52) est configurée pour commander à l'injecteur pilote (390) d'injecter le carburant liquide pilote dans le mode à carburant liquide entre environ 30° et 0° avant PMH, de préférence entre environ 25° et 5°C avant PMH, et en particulier entre environ 20° et 5° avant PMH.

9. Moteur à double flux selon l'une quelconque des revendications précédentes, dans lequel l'unité de commande (52) est configurée pour commander à l'injecteur pilote (390) d'injecter des quantités différentes de carburant liquide pilote respectivement dans le mode à carburant liquide et dans le mode à gaz.

10. Moteur à double flux selon la revendication 9, dans lequel l'unité de commande (52) est configurée pour commander à l'injecteur pilote (390) d'injecter une quantité maximale de carburant liquide pilote dans le mode à carburant liquide.

11. Moteur à double flux selon l'une quelconque des revendications précédentes, comprenant en outre un ou plusieurs capteurs pour détecter une pression de cylindre et/ou une température et/ou une pression d'air d'admission comprimé fourni au moteur à double flux, dans lequel l'unité de commande (52) est configurée pour ajuster la quantité et/ou le timing de l'injection de carburant pilote par l'injecteur pilote (390) dans le mode à carburant liquide sur la base d'un résultat de détection de l'un ou plusieurs capteurs.

12. Moteur à double flux selon l'une quelconque des revendications précédentes, dans lequel l'unité de commande (52) est configurée pour régler une pression d'air de collecteur d'admission, et pour ajuster la quantité et/ou le timing de l'injection de carburant pilote par l'injecteur pilote (390) sur la base de la pression d'air de collecteur d'admission réglée.

13. Moteur à double flux selon l'une quelconque des revendications précédentes, dans lequel l'injecteur principal (374) est configuré pour injecter du mazout lourd en tant que carburant liquide principal, et l'injecteur pilote (390) est configuré pour injecter du gazole en tant que carburant liquide pilote.

14. Procédé de fonctionnement d'un moteur à double flux utilisable dans un mode à gaz et dans un mode à carburant liquide, le procédé comprenant :
l'introduction d'un carburant gazeux et l'injection d'un carburant liquide pilote dans l'au moins un cylindre (360) du moteur à double flux dans le mode à carburant gazeux ;
l'injection d'un carburant liquide principal dans l'au moins un cylindre (360) du moteur à double flux dans le mode à carburant liquide ; et
l'injection du carburant liquide pilote dans l'au moins un cylindre (360) du moteur à double flux avant l'injection du carburant liquide principal pour aider à l'allumage du carburant liquide principal lorsque le moteur fonctionne dans le mode à carburant liquide.

15. Procédé selon la revendication 14, dans lequel l'étape de l'injection du carburant liquide pilote dans le mode à carburant liquide comprend l'injection du carburant liquide pilote entre environ 30° et 0° avant PMH, de préférence entre environ 25° et 5°C avant PMH, et en particulier entre environ 20° et 5° avant PMH.
